# FASCICULE DE BREVET EUROPEEN

(11) **EP 4 281 349 B1**
(45) Date de publication et mention de la délivrance du brevet: **02.09.2026**
(21) Numéro de dépôt: 22700594.9
(22) Date de dépôt: 11.01.2022
(51) Int. Cl.: B60W 60/00, G05D 1/00, B60W 30/18

(54) **MODULE DE CALCUL DE TRAJECTOIRE, DISPOSITIF DE CONTRÔLE DE TRAJECTOIRE ET PROCÉDÉ ASSOCIÉS**
PFADBERECHNUNGSMODUL UND ZUGEHÖRIGE PFADSTEUERUNGSVORRICHTUNG UND VERFAHREN
PATH CALCULATION MODULE, AND ASSOCIATED PATH CONTROL DEVICE AND METHOD

(30) Priorité: 25.01.2021 FR 2100689
(43) Date de publication de la demande: 29.11.2023
(73) Titulaire: Ampere SAS, 92100 Boulogne-Billancourt (FR)
(72) Inventeur: BENAZIZ, Marouane, 35510 Cesson-Sevigné (FR); PEYRET, Maud, 91300 Massy (FR)
(74) Mandataire: Renault Group
(86) Numéro de dépôt international: PCT/EP2022/050383
(87) Numéro de publication internationale: WO 2022/157032

(56) Documents cités:
- CN-B- 110 597 245
- US-A1- 2018 284 266
- HONGYU ZHENG ET AL: "Investigation of a Longitudinal and Lateral Lane-Changing Motion Planning Model for Intelligent Vehicles in Dynamical Driving Environments", IEEE ACCESS, vol. 7, 1 January 2019 (2019-01-01), pages 44783 - 44802, XP055766181, DOI: 10.1109/ACCESS.2019.2909273
- D KORZENIOWSKI ET AL: "Method of planning a reference trajectory of a single lane change manoeuver with Bezier curve", IOP CONFERENCE SERIES: MATERIALS SCIENCE AND ENGINEERING, vol. 148, 1 September 2016 (2016-09-01), GB, pages 012012, XP055765061, ISSN: 1757-8981, DOI: 10.1088/1757-899X/148/1/012012
- BAE IL ET AL: "Lane Change Maneuver based on Bezier Curve providing Comfort Experience for Autonomous Vehicle Users", 2019 IEEE INTELLIGENT TRANSPORTATION SYSTEMS CONFERENCE (ITSC), IEEE, 27 October 2019 (2019-10-27), pages 2272 - 2277, XP033668181, DOI: 10.1109/ITSC.2019.8916845

## Description

La présente invention concerne un dispositif de contrôle de trajectoire pour véhicule automobile.

La présente invention concerne plus particulièrement un dispositif pour contrôler en temps réel la trajectoire d'un véhicule automobile lors d'un changement de trajectoire, par exemple lors d'un changement de voie de circulation, un module de calcul de trajectoire intégré dans le dispositif et un procédé de mise en œuvre d'un tel dispositif.

Certains véhicules automobiles sont à ce jour équipés de dispositifs de contrôle de trajectoire conçus de tels sorte qu'ils permettent d'assister le conducteur pour maintenir le véhicule dans la voie dans laquelle il circule, notamment pour maintenir le véhicule au centre de la voie. De tels dispositifs peuvent également équiper les véhicules autonomes dans lesquels la conduite est entièrement déléguée au véhicule. Ils agissent sur la direction du véhicule en modifiant l'angle de braquage des roues directrices du véhicule.

De tels dispositifs peuvent également permettre au véhicule de changer de voies de circulation de façon semi-autonome lorsque le conducteur du véhicule actionne par exemple un clignotant et modifie la position du volant, ou de façon autonome, l'instant de changement de voie de circulation étant déterminé par le dispositif.

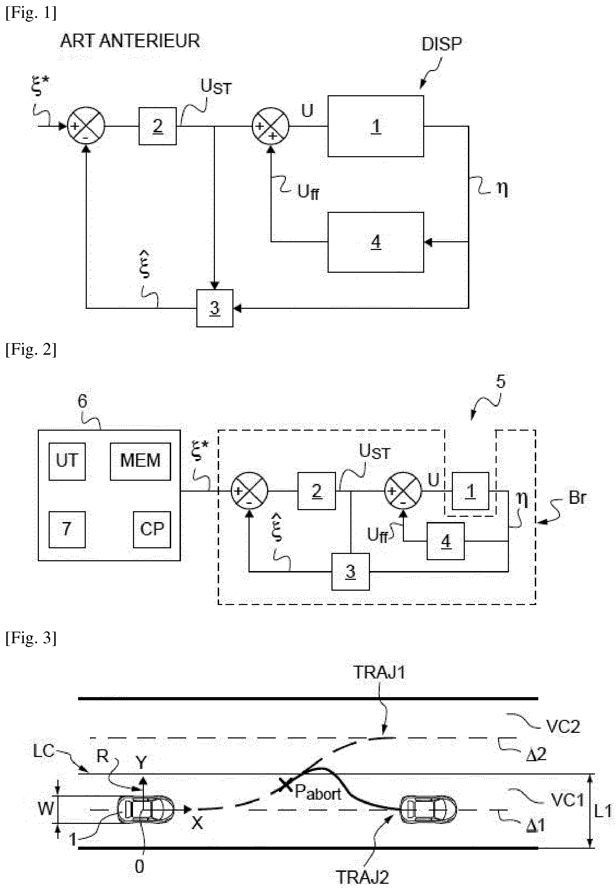

La [Fig.1] illustre un dispositif DISP de contrôle en temps réel de trajectoire appliqué à un véhicule 1 automobile à traction entraîné par un moteur comportant deux roues directrices, de préférence les roues avant du véhicule, contrôlées par un actionneur piloté par un signal de commande *U.*

Dans ce qui suit l'opérateur *ẋ* désigne la dérivée temporelle de *x*.

Le véhicule 1 comprend en outre un capteur destiné à mesurer un paramètre de roulage du véhicule, tel que la vitesse longitudinale réelle V, l'angle δ de braquage réalisé des roues avant, la vitesse de lacet *Ψ̇* du véhicule ou l'angle de direction.

Le véhicule peut en outre être équipé d'un appareil de type RaCam combinant les propriétés d'une caméra optique et d'un radar, permettant de fournir un modèle d'une ligne directrice de la voie de circulation du véhicule sous la forme d'un polynôme y(x) ou d'une caméra optique permettant de déterminer le polynôme y(x).

Le véhicule 1 est équipé d'un calculateur embarqué comprenant un dispositif contrôleur 2 pour générer un signal de commande *Ust* de façon à rendre un vecteur d'état physique ξ du véhicule conforme à un vecteur d'état de consigne ξ* pour que le véhicule 1 suive une trajectoire souhaitée.

Le calculateur embarqué comprend en outre un observateur 3 pour générer en temps réel un vecteur d'état estimé *ξ̂* de suivi de trajectoire. Ce vecteur d'état est estimé pour une vitesse V du véhicule, à partir de la commande *Ust* et d'un vecteur η de mesure de variables d'état corrélé au vecteur d'état physique ξ de suivi de trajectoire du véhicule 1.

Le dispositif observateur 3 a pour but de générer en temps réel un vecteur d'état estimé *ξ̇* représentant le plus fidèlement possible le vecteur ξ d'état effectif, et met en œuvre un modèle de véhicule connu sous le nom de modèle bicyclette.

Le calculateur embarqué comporte en outre un module anticipateur 4 additionnant une deuxième commande *Uff* de braquage en fonction d'une courbure γff
d'un virage, à la première commande *Ust* de braquage produite par le dispositif 2 pour compenser le virage.

La deuxième commande de braquage *Uff* permet au véhicule 1 de franchir le virage de courbure
γff.

La deuxième commande est ajoutée au signal de commande *Ust* de sorte que le dispositif contrôleur 2 régule la trajectoire du véhicule 1 pour que le véhicule 1 suive une route droite.

Par conséquent, le signal de commande *U* est égal à la somme de la première commande *Ust* et de la deuxième commande *Uff.*

Le dispositif 2, l'observateur 3 et le module 4 forment une boucle de régulation fermée Br ayant pour consigne le vecteur d'état de consigne ξ*.

Le vecteur d'état physique ξ du véhicule est égal à :
$ξ = \left(\begin{matrix}\dot{Ψ} \\ Ψ \\ {yl}^{⋅} \\ yl \\ \dot{δ} \\ δ \\ \int - yl\end{matrix}\right)$
où Ψ est l'angle relatif de cap entre l'axe du véhicule et la tangente à la trajectoire de référence, *ẏl* est la vitesse latérale d'éloignement du véhicule par rapport à la trajectoire idéale du véhicule, yl est l'écart latéral entre le centre de gravité du véhicule et le centre de la voie du véhicule et la tangente à la trajectoire en avant du véhicule, *δ̇* est la variation de l'angle de braquage et ∫-*yl* représente l'intégrale de la position latérale.

Le vecteur d'état de consigne ξ* est égal à :
$ξ * = \left(\begin{matrix}{\dot{Ψ}}_{ref} \\ {Ψ}_{ref} \\ {{yl}^{⋅}}_{ref} \\ {yl}_{ref} \\ {\dot{δ}}_{ref} \\ {δ}_{ref} \\ {\int - yl}_{ref}\end{matrix}\right)$

Et le vecteur d'état estimé *ξ̂* est égal à :
$\hat{ξ} = \left(\begin{matrix}{\dot{Ψ}}_{est} \\ {Ψ}_{est} \\ {{yl}^{⋅}}_{est} \\ {yl}_{est} \\ {\dot{δ}}_{est} \\ {δ}_{ref} \\ {\int - yl}_{est}\end{matrix}\right)$

Le vecteur ξ est partiellement inconnu car l'état interne du véhicule 1 n'est pas accessible dans sa totalité.

L'observateur 3 estime la vitesse latérale d'éloignement du véhicule par rapport à la trajectoire idéale du véhicule *ẏl* et la variation de l'angle de braquage*δ̇*, les cinq variables d'état étant mesurées.

Le vecteur η de mesures actuelles comporte cinq composantes :
$η = \left(\begin{matrix}\dot{Ψ} \\ Ψ \\ yl \\ δ \\ \int - yl\end{matrix}\right)$

La vitesse de lacet *Ψ̇* est mesurée par le capteur de vitesse de lacet.

Lors d'un changement de voie de circulation, le vecteur d'état de consigne ξ* est modifié de sorte que le dispositif DISP pilote le véhicule 1 afin qu'il se déporte au centre d'une voie de circulation adjacente de celle sur laquelle évolue le véhicule de manière confortable pour les passagers du véhicule.

Pendant le changement de voie, le conducteur ou le dispositif peuvent décider d'interrompre la manœuvre et piloter le véhicule de sorte qu'il revienne au centre de la voie de départ, par exemple suite à l'apparition d'un obstacle.

Une solution pour ramener le véhicule au centre de la voie de départ consiste à injecter un vecteur d'état de consigne nul en entrée de la boucle de régulation fermée.

Cependant, le saut de consigne de la boucle de régulation Br, la dynamique du dispositif contrôleur 2 cherchant à suivre le vecteur d'état de consigne pour changer de voie de circulation, et l'écart présent entre le véhicule et la première voie de circulation peuvent engendrer un retour du véhicule au centre de la première voie de circulation qui soit inconfortable pour les passagers.

On pourra se référer au document US20180348767 qui divulgue un dispositif de changement de voie de circulation mettant en œuvre un contrôleur de trajectoire modélisant une trajectoire par une courbe de Bézier. US2018284266 A1 and DOI: 10.1109/ACCESS.2019.2909273 montrent des systèmes comparables.

La trajectoire lors du changement de voie de direction dépend du profil de vitesse du véhicule, la détermination de la trajectoire mettant en œuvre un calcul d'optimum nécessitant d'importants moyens de calcul.

De plus, si la trajectoire déterminée n'est pas compatible avec l'environnement du véhicule, le calcul d'optimum est réitéré.

En outre, le dispositif ne divulgue pas de stratégie d'abandon du changement de voie de circulation.

On pourra par ailleurs se référer au document intitulé « Méthode de planification d'une trajectoire de référence avec une courbe de Bézier lors d'une manœuvre de changement de voie, D Korzeniowski and G Ślaski » proposant une méthode de changement de voie de circulation mettant en œuvre deux courbes de Bézier symétriques définissant une trajectoire de changement de voie de circulation vers deux voies de circulation adjacentes situées de part et d'autre du véhicule.

Comme les deux courbes sont symétriques et reliées entre elles, il est nécessaire d'assurer la continuité entre les deux courbes.

De plus, il est nécessaire de calculer plusieurs trajectoires à partir des courbes de Bézier pour déterminer la trajectoire optimale de changement de voie.

La méthode proposée nécessite d'importants moyens de calcul pour assurer la continuité des courbes de Bézier et déterminer la trajectoire optimale de changement de voie.

En outre, le dispositif ne divulgue pas de stratégie d'abandon du changement de voie de circulation.

Le document WO2019/059829 divulgue une méthode de détermination de changement de voie de circulation mettant en œuvre une trajectoire de changement de voie déterminée par un système de changement de voie de circulation à partir de la trajectoire induite par le conducteur et d'une trajectoire déterminée par le système.

Le changement de voie de circulation est déclenché par l'intervention du conducteur.

Cependant, cette méthode nécessite l'intervention du conducteur et ne propose pas de stratégie d'abandon du changement de voie de circulation.

Le document US 9,796,421 divulgue un dispositif de contrôle latéral pour véhicule automobile mais ne divulgue pas de méthode pour changer de voie de circulation.

Ce dispositif ne divulgue pas non plus de stratégie d'abandon du changement de voie de circulation.

Le document FR 2004667 (non publié) divulgue un dispositif de contrôle de trajectoire pour véhicule automobile.

Une première courbe de Bézier modélise une trajectoire de changement de voie de circulation du véhicule.

Lors de l'abandon de la manœuvre de changement de voie, le dispositif détermine une deuxième courbe de Bézier modélisant une trajectoire de retour du véhicule au centre de la voie de circulation à partir de paramètres de la première courbe de Bézier et de l'instant d'abandon de la manœuvre.

Cependant, il a été constaté que la trajectoire de retour entraîne un mouvement latéral du véhicule de grande amplitude pouvant être inconfortable pour les passagers.

Il est donc proposé de pallier tout ou partie des inconvénients des dispositifs de changement de voie de circulation selon l'état de la technique, notamment en proposant un dispositif de contrôle de trajectoire déterminant une trajectoire de retour du véhicule au centre de la voie de circulation d'évolution du véhicule confortable pour les passagers.

Au vu de ce qui précède, l'invention a pour objet un procédé de contrôle de trajectoire pour véhicule automobile, comprenant :
le pilotage du véhicule à partir d'un premier vecteur d'état de consigne lors d'un changement de voie de circulation de sorte que le véhicule circulant sur une première voie de circulation se déporte sur une deuxième voie de circulation en une durée prédéterminée, la trajectoire du véhicule lors du changement de voie de circulation étant modélisée par une première courbe de Bézier reliant une valeur d'un paramètre de discrétisation à une valeur d'un premier écart latéral du véhicule par rapport au centre d'une voie de circulation et à une valeur d'une variable temporelle représentative de l'évolution du changement de trajectoire ;
le pilotage du véhicule à partir d'un deuxième vecteur d'état de consigne lors d'un abandon du changement de voie de circulation de sorte que le véhicule circulant sur la première voie de circulation se déporte au centre de ladite première voie, la trajectoire de retour du véhicule au centre de la première voie de circulation étant modélisée par une deuxième courbe de Bézier paramétrée à partir de la valeur de la variable temporelle à l'instant de l'abandon du changement de voie, de la valeur de l'écart latéral associée par la première courbe de Bézier à ladite valeur, et de paramètres de la première courbe de Bézier.

La deuxième courbe de Bézier est en outre paramétrée à partir de la position latérale et de la vitesse latérale de la trajectoire de changement de voie de circulation de la première voie vers la deuxième voie à l'instant de l'abandon du changement de voie.

Selon une caractéristique, la modélisation de la trajectoire de retour du véhicule au centre de la première voie de circulation lors de l'abandon du changement de voie de circulation par une deuxième courbe de Bézier comprend la détermination d'au moins quatre points de contrôle de la deuxième courbe de Bézier, chaque point de contrôle étant identifié par une valeur de la variable temporelle et une valeur d'écart latéral,
la valeur de la variable temporelle d'un premier point de contrôle étant nulle, et la valeur d'écart latéral du premier point de contrôle étant égale à la valeur de l'écart latéral associée par la première courbe de Bézier à l'instant de l'abandon du changement de voie,
la valeur de la variable temporelle d'un deuxième point de contrôle étant déterminée à partir de la valeur de la variable temporelle d'un point de contrôle de la première courbe de Bézier et de l'instant de l'abandon du changement de voie, et la valeur d'écart latéral du deuxième point de contrôle étant déterminée à partir de la valeur de la variable temporelle d'un point de contrôle de la première courbe de Bézier, de la position latérale et de la vitesse latérale de la trajectoire de changement de voie de circulation à l'instant de l'abandon du changement de voie, et
les troisième et quatrième points de contrôle étant déterminés de sorte que le cumul de la durée de changement de voie de circulation effectuée par le véhicule et de la durée de retour du véhicule sur la première voie de circulation soit égal à la durée prédéterminée.

Avantageusement, la valeur de la variable temporelle du troisième point de contrôle est égale à la moyenne des valeurs de la variable temporelle des deuxième et quatrième points de contrôle de la deuxième courbe de Bézier.

De préférence, la valeur maximale de la variable temporelle du deuxième point de contrôle est inférieure ou égale à un seuil de contrôle de sorte que le véhicule ne franchisse pas la ligne centrale séparant les première et deuxième voies de circulation.

Avantageusement, le seuil de contrôle est déterminé à partir de la largeur de la voie de circulation du véhicule, de la largeur du véhicule et d'un seuil d'ajustement.

L'invention a également pour objet un module de calcul de trajectoire pour véhicule automobile, le module comprenant :
des moyens pour transmettre un premier vecteur d'état de consigne en entrée d'une boucle de régulation fermée d'un dispositif de contrôle de trajectoire, la boucle étant configurée pour piloter le véhicule automobile de sorte que le véhicule circulant sur une première voie de circulation se déporte sur une deuxième voie de circulation en une durée prédéterminée, la trajectoire étant modélisée par une première courbe de Bézier reliant une valeur d'un paramètre de discrétisation à une valeur d'un écart latéral du véhicule par rapport au centre d'une voie de circulation sur laquelle évolue le véhicule et à une valeur d'une variable temporelle représentative de l'évolution du changement de trajectoire, le vecteur étant déterminé à partir à partir de l'écart latéral, de la variable temporelle et du paramètre de discrétisation,
des moyens pour modéliser une trajectoire de retour du véhicule au centre de la première voie de circulation lors de l'abandon du changement de voie de circulation par une deuxième courbe de Bézier à partir de la valeur de la variable temporelle à l'instant de l'abandon du changement de voie de circulation, de la valeur de l'écart latéral associée par la première courbe de Bézier à ladite valeur, et de paramètres de la première courbe de Bézier,
des moyens pour déterminer un deuxième vecteur d'état de consigne de la boucle de régulation fermée du dispositif de contrôle de trajectoire de sorte que le véhicule retourne circuler au centre de la première voie, et
des moyens pour transmettre le deuxième vecteur d'état de consigne en entrée de la boucle.

La deuxième courbe de Bézier est en outre paramétrée à partir de la position latérale et de la vitesse latérale de la trajectoire de changement de voie de circulation de la première voie vers la deuxième voie à l'instant de l'abandon du changement de voie.

Selon une caractéristique, la deuxième courbe de Bézier est paramétrée par au moins quatre points de contrôle, chaque point de contrôle étant identifié par une valeur de la variable temporelle et une valeur d'écart latéral et, les moyens pour modéliser une trajectoire de retour du véhicule au centre de la première voie de circulation lors de l'abandon du changement de voie de circulation étant configurés pour déterminer les quatre points de contrôle de sorte que :
la valeur de la variable temporelle d'un premier point de contrôle est nulle, et la valeur d'écart latéral du premier point de contrôle est égale à la valeur de l'écart latéral associée par la première courbe de Bézier à l'instant de l'abandon du changement de voie,
la valeur de la variable temporelle d'un deuxième point de contrôle est déterminée à partir de la valeur d'un point de contrôle de la première courbe de Bézier et de l'instant de l'abandon du changement de voie, et la valeur d'écart latéral du deuxième point de contrôle est déterminée à partir la valeur de la variable temporelle d'un point de contrôle de la première courbe de Bézier, de la position latérale et de la vitesse latérale de la trajectoire de changement de voie de circulation à l'instant de l'abandon du changement de voie, et
les troisième et quatrième points de contrôle sont déterminés de sorte que le cumul de la durée de changement de voie de circulation effectuée par le véhicule et de la durée de retour du véhicule sur la première voie de circulation soit égal à la durée prédéterminée.

De préférence, la valeur de la variable temporelle du troisième point de contrôle est égale à la moyenne des valeurs de la variable temporelle des deuxième et quatrième points de contrôle de la deuxième courbe de Bézier.

Avantageusement, les moyens pour modéliser une trajectoire de retour sont en outre configurés pour déterminer un seuil de contrôle de sorte que le véhicule ne franchisse pas la ligne centrale séparant les première et deuxième voies de circulation, et saturer la valeur de la variable temporelle du deuxième point de contrôle de sorte que la valeur maximale de ladite variable soit inférieure ou égale au seuil de contrôle.

De préférence, les moyens pour modéliser une trajectoire de retour sont configurer pour déterminer le seuil de contrôle à partir de la largeur de la voie de circulation du véhicule, de la largeur du véhicule et d'un seuil d'ajustement.

Selon encore un autre aspect, l'invention a également pour objet un dispositif de contrôle de trajectoire comprenant un module de calcul de trajectoire tel que défini précédemment, et une boucle de régulation fermée configurée pour recevoir en consigne successivement les premier et deuxième vecteurs d'état de consigne transmis par le module de calcul de trajectoire, la boucle de régulation étant en outre configurée pour piloter le véhicule automobile de sorte qu'il suive les trajectoires modélisées par les première et deuxième courbes de Bézier.

D'autres buts, caractéristiques et avantages de l'invention apparaîtront à la lecture de la description suivante, donnée uniquement à titre d'exemple non limitatif, et faite en référence aux dessins annexés sur lesquels :
[Fig.1] dont il a déjà été fait mention, illustre schématiquement un dispositif de contrôle en temps réel de trajectoire d'un véhicule selon l'état de la technique ;
[Fig.2] illustre schématiquement un mode de réalisation d'un dispositif de contrôle de trajectoire d'un véhicule selon l'invention ;
[Fig.3]
   et

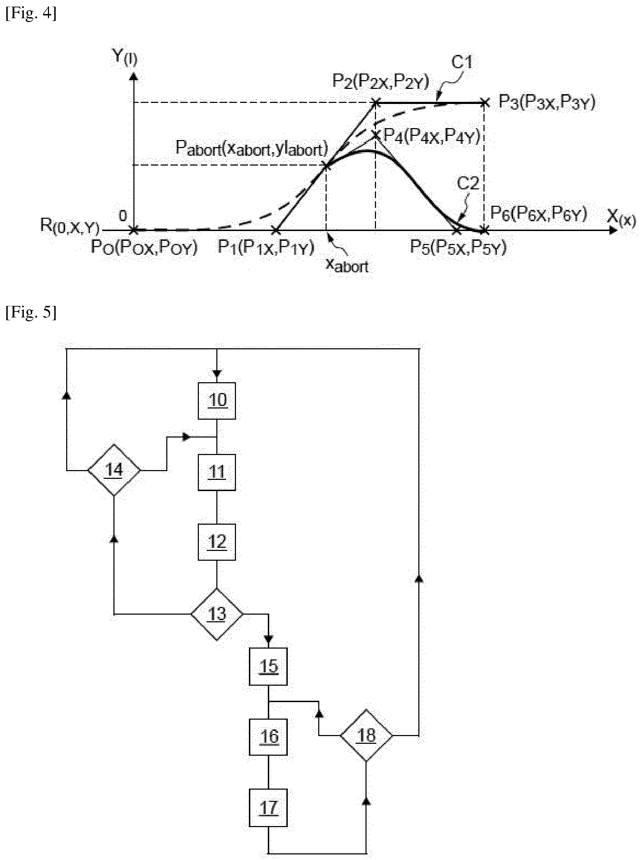

[Fig.4] illustrent un exemple de modélisation d'une trajectoire de retour du véhicule 1 selon l'invention ;
[Fig.5] illustre un mode de mise en œuvre du dispositif de contrôle de trajectoire d'un véhicule selon l'invention ; et

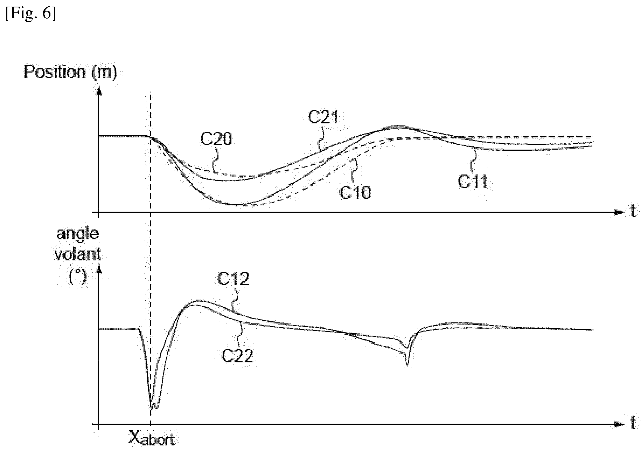

[Fig.6] représente l'évolution temporelle de l'écart latéral de consigne, de l'écart latéral et de l'angle des roues suite à l'action du dispositif de contrôle selon l'invention.

On a schématiquement représenté sur la [Fig.2] un mode de réalisation d'un dispositif 5 de contrôle de trajectoire du véhicule 1 selon un aspect de l'invention. Les éléments du dispositif 5 identiques aux éléments constituant le dispositif DISP de la [Fig.1] portent les mêmes références.

Le dispositif 5 comprend la boucle de régulation fermée Br comprenant le dispositif contrôleur 2 pour générer le signal de commande *Ust,* l'observateur 3 pour générer en temps réel le vecteur d'état estimé *ξ̂* de suivi de voie rectiligne du véhicule à partir du vecteur η de mesures actuelles et le module anticipateur régulateur dit « feedforward » 4 qui ajoute la valeur d'angle au volant nécessaire pour réaliser le virage en fonction de la courbure dudit virage, de la vitesse du véhicule et de ses paramètres pour générer la deuxième commande de braquage Uff.

La commande *Ust* est égale à la valeur d'un angle δ_{rect} de suivi de trajectoire rectiligne.

Le dispositif 5 comprend en outre un module 6 de contrôle de trajectoire comportant des moyens pour déterminer le premier vecteur d'état de consigne ξ* lors d'un changement de voie de circulation et un deuxième vecteur d'état de consignes ${ξ}_{1}^{∗}$ lors du l'abandon du changement de voie de circulation de sorte que le véhicule revienne sur la voie de circulation initiale.

Le module de calcul 6 comprend des moyens pour transmettre les premier et deuxième vecteurs d'état de consigne ξ* et ${ξ}_{1}^{∗}$ en entrée de la boucle de régulation Br du dispositif de contrôle de trajectoire 5 de sorte que le véhicule 1 circulant sur une première voie VC1 de circulation se déporte vers une deuxième voie VC2 de circulation et retourne sur la première voie de VC1 pendant une durée prédéterminée Tp, la durée prédéterminée étant initialement prévue comme étant la durée du changement de voie de circulation.

La trajectoire de changement TRAJ1 de la première voie de circulation (voie initiale) VC1 vers la deuxième voie de circulation VC2 est modélisée par une première courbe C1 de Bézier reliant une valeur d'un premier paramètre S à une valeur de l'écart latéral yl du véhicule 1 par rapport au centre de la voie de circulation sur laquelle évolue le véhicule 1 et à une valeur d'une variable temporelle x représentative de l'évolution du changement de trajectoire.

Le premier vecteur d'état de consigne ξ*est déterminé à partir à partir de l'écart latéral yl, de la variable temporelle x et du premier paramètre S.

Le module de calcul 6 comprend en outre des moyens pour modéliser la trajectoire de retour TRAJ2 du véhicule au centre de la première voie VC1 de circulation lors de l'abandon, à un point noté P_{abort}, du changement de voie de circulation par une deuxième courbe C2 de Bézier à partir de la valeur x_{abort} de la variable temporelle x à l'instant de l'abandon du changement de voie, de la valeur yl_{abort} de l'écart latéral associée par la première courbe P1 de Bézier à ladite valeur x_{abort}, et de paramètres de la première courbe P1 de Bézier, le point P_{abort} étant défini par les valeurs x_{abort} et yl_{abort}.

La deuxième courbe C2 de Bézier relie une valeur du premier paramètre S à une valeur d'un deuxième écart latéral yl2 du véhicule 1 par rapport au centre d'une voie de circulation et à une valeur de la variable temporelle x.

On note Tc la durée du changement de voie effectué par le véhicule 1 jusqu'à la valeur x_{abort} de la variable temporelle x et Tr la durée de retour du véhicule 1 au centre de la voie VC1 à partir de la valeur x_{abort} de la variable temporelle x, la somme des deux durées étant égale à la durée Tp.

Le module 6 comporte des moyens d'acquisition optique 7 comportant par exemple une caméra optique.

Les figures 3 et 4 illustrent un exemple de modélisation de la trajectoire TRAJ1 du véhicule 1 circulant au centre Δ1 de la première voie de circulation VC1 de largeur L1 et se déportant au centre Δ2 de la deuxième voie de circulation VC2 adjacente à la première voie VC1 par le module 6, et de la trajectoire TRAJ2 du véhicule 1 ramenant le véhicule 1 au centre Δ1 de la première voie VC1 à partir du point P_{abort}, les première et deuxième voies de circulation VC1, VC2 étant séparées par une ligne centrale LC.

Bien que dans cet exemple le véhicule 1 se déporte sur son côté gauche dans le sens d'avancement, en variante, le véhicule 1 peut se déporter sur son côté droit lorsque le véhicule circule sur la deuxième voie de circulation VC2 ou encore en mode de conduite à gauche.

La largeur L1 de la première voie de circulation est déterminée par les moyens d'acquisition optique 7.

Le véhicule 1 a une largeur W.

La courbe TRAJ1 représente la trajectoire du véhicule 1 pour passer de la première voie de circulation VC1 à la deuxième voie VC2.

On note R(O, X, Y) un repère relié à la voie VC1 dont l'origine O est sur le centre Δ1 de la voie VC1 avant que le véhicule 1 commence à se déporter, X est orienté selon le sens de déplacement du véhicule 1 et Y est disposé de sorte que le repère R soit orthogonal.

La trajectoire du véhicule 1 est déterminée en ligne droite, le module anticipateur 4 déterminant à partir de la courbure
γff
de la route, de la vitesse V du véhicule et des caractéristiques du véhicule 1,
notamment la masse du véhicule et la raideur des pneus, la deuxième commande *Uff* de braquage.

Au cours de la manœuvre de changement de voie, au point P_{abort}, la manœuvre de changement de voie est abandonnée, le point P_{abort} ayant pour coordonnées (x_{abort} ; yl_{abort}) dans le repère R

A compter du point P_{abort}, le dispositif 5 pilote le véhicule 1 de sorte qu'il suive la trajectoire de retour TRAJ2.

On se réfère plus particulièrement à la [Fig.4] qui illustre un exemple de modélisation des trajectoires TRAJ1 et TRAJ2 respectivement par les courbes de Bézier C1 et C2 dans le repère R(O, X, Y).

On suppose que la première courbe de Bézier C1 comprend quatre points de contrôle P₀, P₁, P₂ et P₃ de coordonnées respectives (P₀ₓ ; P_{0y}), (P₁ₓ ; P_{1y}), (P₂ₓ ; P_{2y}) et (P₃ₓ ; P_{3y}) et a pour équation :
$P \left(s\right) = {P}_{0} {\left(1-s\right)}^{3} + 3 {P}_{1} s {\left(1-s\right)}^{2} + 3 {P}_{2} {s}^{2} \left(1-s\right) + {P}_{3} {s}^{3}$
avec s variant entre 0 et 1.

On suppose que l'axe des abscisses X représente la variable temporelle x représentative de l'évolution temporelle du changement de trajectoire et l'axe des ordonnées Y représente la position latérale yl du véhicule 1 par rapport au repère R(O, X, Y) de la voie VC1.

La durée prédéterminée Tp est égale à la valeur P_{3X}.

Le déplacement du véhicule 1 s'effectue entre le centre C1 de la première voie VC1 correspondant à une position latérale initiale ylᵢₙᵢ définie par les coordonnées du point de contrôle P₀ disposé sur le centre C1 et une position finale yl_{fin} définie par les coordonnées du point de contrôle P₃ disposé sur le centre C2.

On obtient l'équation suivante :
$\left(\begin{matrix}x \\ yl\end{matrix}\right) = \left(\begin{matrix}{P}_{0 x} \\ {P}_{0 y}\end{matrix}\right) {\left(1-s\right)}^{3} + 3 \left(\begin{matrix}{P}_{1 x} \\ {P}_{1 y}\end{matrix}\right) s {\left(1-s\right)}^{2} + 3 \left(\begin{matrix}{P}_{2 x} \\ {P}_{2 y}\end{matrix}\right) {s}^{2} \left(1-s\right) + \left(\begin{matrix}{P}_{3 x} \\ {P}_{3 y}\end{matrix}\right) {s}^{3}$

En variante, la courbe de Bézier peut comprendre plus de quatre points de contrôle pour améliorer la précision de la modélisation de la trajectoire TRAJ1.

En discrétisant l'équation (6) en introduisant la variable i variant de 0 à N, pour chaque instant xᵢ, l'équation (6) est égale à :
$\left(\begin{matrix}{x}_{i} \\ {yl}_{i}\end{matrix}\right) = \left(\begin{matrix}{P}_{0 x} \\ {P}_{0 y}\end{matrix}\right) {\left(1-{s}_{i}\right)}^{3} + 3 \left(\begin{matrix}{P}_{1 x} \\ {P}_{1 y}\end{matrix}\right) {s}_{i} {\left(1-{s}_{i}\right)}^{2} + 3 \left(\begin{matrix}{P}_{2 x} \\ {P}_{2 y}\end{matrix}\right) {{s}_{i}}^{2} \left(1-{s}_{i}\right) + \left(\begin{matrix}{P}_{3 x} \\ {P}_{3 y}\end{matrix}\right) {{s}_{i}}^{3}$

La deuxième courbe C2 de Bézier comprend quatre points de contrôle, un premier point de contrôle P_{abort}, un deuxième point de contrôle P4, un troisième point de contrôle P5 et un quatrième point de contrôle P6 de sorte que :
${P}_{abort x} = 0$ ${P}_{abort y} = {yl}_{abort}$
pour assurer une continuité entre les première et deuxième courbes C1, C2 de Bézier ;${P}_{4 x} = {P}_{2 x} - {x}_{abort}$
   ${P}_{4 y} = {P}_{abort y} + {P}_{4 x} ⋅ \dot{y} {l}_{abort}$
pour assurer une continuité de la vitesse latérale *ẏl* du véhicule lors du basculement de la trajectoire de changement TRAJ1 de voie de circulation vers la trajectoire de retour TRAJ2 au centre Δ1 de la première voie VC1 de circulation en minimisant l'écart latéral yl lors du retour du véhicule 1 au centre de ladite première voie, où *ẏl_{abort}* est la vitesse latérale à l'instant de l'abandon du changement de voie (x= x_{abort}) ;
   ${P}_{5 x} = \frac{1}{2} ⋅ \left({P}_{6 x}+{P}_{4 x}\right)$
   ${P}_{6 x} = {P}_{3 x} - {x}_{abort}$
de sorte que la durée de changement Tc de voie de circulation effectuée par le véhicule 1 et que la durée de retour Tr du véhicule sur la première voie de circulation VC1 soit égale à la durée prédéterminée Tp et que la manœuvre ne dure donc pas plus longtemps que ce qui était initialement prévu.

On pose
${P}_{5 y} = 0$
${P}_{6 y} = 0$
correspondant aux coordonnées du centre Δ1 de la voie VC1.

Pour que les roues du véhicule 1 ne franchisent pas la ligne centrale LC, la valeur maximale de P_{4y} est inférieure ou égale un seuil de contrôle Sc dépendant de la voie de circulation dans laquelle circule le véhicule 1 lors de l'abandon du changement de voie de circulation.

Lorsque le véhicule se déporte sur son côté gauche dans le sens d'avancement lors de l'abandon de changement de voie, par exemple lorsque le véhicule 1 circule dans la première voie de circulation VC1 lors de l'abandon de changement de voie, le seuil de contrôle Sc exprimé en mètre est égal à :
$Sc = \frac{1}{2} L 1 - \frac{1}{2} W + {S}^{a}$
où Sa est un seuil d'ajustement permettant d'ajuster, par exemple empiriquement, la position des roues du véhicule 1 par rapport à la ligne centrale LC, la largeur L1 de la première voie de circulation et la largeur W du véhicule 1 étant exprimées en mètre. Le seuil Sa peut être nul.

Lorsque le véhicule se déporte sur son côté droit dans le sens d'avancement lors de l'abandon de changement de voie, par exemple lorsque le véhicule 1 circule dans la deuxième voie de circulation VC2 lors de l'abandon de changement de voie, le seuil de contrôle Sc est égal à :
$Sc = - \frac{1}{2} L 1 + \frac{1}{2} W - {S}^{a}$

On constate que les signes précédent la largeur L1, la largeur W et le seuil Sa sont inversés dans les équations (16) et (17) selon que le véhicule 1 se déporte sur son côté gauche ou son côté droit selon le sens d'avancement du véhicule 1.

De manière analogue à la première courbe C1, la deuxième courbe C2 de Bézier à pour équation :
$\left(\frac{{x}_{i}}{yl {2}_{i}}\right) = \left(\begin{matrix}0 \\ {yl}_{abort}\end{matrix}\right) {\left(1-{s}_{i}\right)}^{3} + 3 \left(\begin{matrix}{P}_{4 x} \\ {P}_{4 y}\end{matrix}\right) {s}_{i} {\left(1-{s}_{i}\right)}^{2} + 3 \left(\begin{matrix}{P}_{5 x} \\ 0\end{matrix}\right) {{s}_{i}}^{2} \left(1-{s}_{i}\right) + \left(\begin{matrix}{P}_{6 x} \\ 0\end{matrix}\right) {{s}_{i}}^{3}$
la variable i variant de 0 à N, pour chaque instant xᵢ.

Le module 6 comprend les moyens pour modéliser la trajectoire TRAJ2 comportent par exemple une unité de traitement UT déterminant l'équation (18) de la deuxième courbe C2 à partir des équations (8) à (15), l'unité de traitement UT déterminant le seuil de contrôle Sc selon les équations (16) et (17), et saturant la valeur de la variable temporelle P_{4y} du deuxième point P₄ de contrôle de sorte que la valeur maximale de ladite variable soit inférieure ou égale au seuil de contrôle Sc.

En outre, l'unité de traitement UT met en œuvre l'équation (7) de la première courbe C1 et l'équation (17) de la deuxième courbe C2.

Le premier paramètre S comprend l'ensemble des paramètres de discrétisation Sᵢ i variant de 1 à N, N étant un nombre entier.

Le nombre N est choisi de sorte qu'il soit suffisamment grand pour obtenir des trajectoires du véhicule 1 à partir des courbes C1 et C2 qui ne soit pas excessivement discrétisées pour ne pas ralentir la boucle de régulation Br et nuire au confort des passagers, et de sorte qu'il ne soit pas excessivement grand afin de minimiser la charge de calcul de l'unité de traitement UT.

N est par exemple égal à 50, les courbes C1 et C2 étant discrétisées en 50 points.

Bien entendu la valeur de N peut être différente de 50.

La valeur de N peut être choisie de manière à ne pas discrétiser excessivement la trajectoire, la valeur de N étant par exemple supérieure à 30.

En outre, la valeur de N peut être choisie de manière à ne pas surcharger l'unité de traitement UT, la valeur de N étant par exemple inférieure à 100.

Le module 6 comprend en outre un compteur CP temporel, le module 6 enclenchant le compteur CP lors du changement de voie de trajectoire et arrêtant le compteur lorsque la valeur atteinte par le compteur est supérieure ou égale à la valeur de la variable temporelle x associée au point de contrôle de la première courbe C1 de Bézier P₃ comprenant la plus grande valeur de la variable temporelle P₃ₓ, la durée écoulée entre le déclenchement et l'arrêt du compteur CP étant égale à la durée prédéterminée Tp.

Le compteur CP fonctionne selon une période Tn.

La période Tn est choisie selon la fréquence de fonctionnement du module 6 et de la boucle Br.

La période Tn est par exemple égale à 10 ms.

La [Fig.5] illustre un exemple de mise en œuvre du dispositif 5 de contrôle de trajectoire lors du changement de voie de circulation.

On suppose que l'équation (7) et les points de contrôle P₀, P₁, P₂ et P₃ sont stockés dans une mémoire MEM du module 6.

Lors de l'étape 10 suivante, le changement de voie de circulation est initié.

Puis, dans une étape 11, le module 6 enclenche le compteur CP.

Pour chaque incrément Tn du compteur, le module 6 détermine le vecteur d'état de consigne ξ* à partir de l'écart latéral ylᵢ, de la variable temporelle xᵢ et du paramètre de discrétisation Sᵢ.

Le vecteur d'état de consigne ξ* comprend des valeurs de consigne comprenant la vitesse de lacet de consigne *Ψ̇*ref, un angle de cap de consigne Ψ_{ref}, et une vitesse latérale de consigne ${{yl}_{ref}}^{.}$ et l'écart latéral de consigne yl_{ref.}

L'angle de braquage de consigne *δref ,* la variation de l'angle de braquage *δref* et l'intégrale de la position latérale ∫*-ylref* de consigne sont égaux à zéro.

Deux incréments consécutifs sont séparés par la durée Tn.

Le module 6 détermine une valeur du paramètre de discrétisation Sᵢ de sorte que chaque incrément Tn du compteur temporelle Cp soit compris entre deux variables temporelles xᵢ et xᵢ₊₁ consécutives.

Puis le module 6 détermine les deux latéraux consécutifs ylᵢ et ylᵢ₊₁ à partir de la valeur du paramètre de discrétisation Sᵢ.

Le module 6 détermine un deuxième écart latéral intermédiaire yl₁ par interpolation des deux écarts latéraux consécutifs ylᵢ et ylᵢ₊₁.

Puis le module 6 détermine des valeurs de consigne selon les équations suivantes :
${\dot{y} l}_{ref} = \frac{{yl}_{i + 1} - {yl}_{i}}{{x}_{i + 1} - {x}_{i}}$
${\dot{ψ}}_{ref} = \frac{{a}_{lat}}{V}$
où V est la vitesse longitudinale du véhicule 1 et aₗₐₜ est l'accélération latérale instantanée de la trajectoire égale à :
${a}_{lat} = \frac{{yl}_{i + 2} - 2 {yl}_{i + 1} + {yl}_{i}}{{x}_{i + 1} - {x}_{i}}$
et
${ψ}_{ref} = \frac{{\dot{y} l}_{ref}}{V}$

L'écart latéral de consigne yl_{ref} est égal à :
$\left\{\begin{matrix}{yl}_{ref} = yl 1 lorsque le v é hicule é volue sur la premi è re voie de circulation VC 1 \\ {yl}_{ref} = yl 1 - {yl}_{fin} ap è es changement de f ile : \\ lorsque le v é hicule é volue sur la deuxi è me voie de circulation VC 2\end{matrix}\right.$

Au cours d'une étape optionnelle 12, lorsque le module 6 comporte des moyens pour déterminer un rayon de courbure correctif *ρ_{SALC}*, le module 6 détermine le rayon de courbure correctif à partir de l'accélération latérale instantanée aₗₐₜ, de la vitesse latérale *ẏl*, et de la vitesse longitudinale V du véhicule selon l'équation suivante :
${ρ}_{SALC} = \frac{{Va}_{lat} - {\dot{y}}_{l} {a}_{lat}}{{\left({V}^{2}+{{\dot{y}}_{l}}^{2}\right)}^{\frac{3}{2}}}$

La valeur du rayon de courbure correctif *ρ_{SALC}* est transmise au module anticipateur 4 et additionnée à la deuxième commande Uff permettant d'améliorer la dynamique du suivi de trajectoire.

Si aucun ordre d'abandon du changement de voie n'est émis (étape 13) et si le changement de voie n'est pas terminé (étape 14), on poursuit à l'étape 11.

Si aucun ordre d'abandon du changement de voie n'est émis (étape 13) et le changement de voie est terminé (étape 14), on poursuit à l'étape 10.

Lors de l'abandon du changement de voie de circulation (étape 13), au cours de l'étape 15 suivante, le module 6 modélise la trajectoire de retour TRAJ2 du véhicule 1 au centre de la première voie de circulation VC1. Cette modélisation est effectuée au moyen de la deuxième courbe C2 de Bézier en déterminant les quatre points de contrôle P_{abort}, P4, P5 et P6 comme décrit précédemment.

La vitesse latérale à l'instant de l'abandon du changement de voie *ẏl_{abort}* est ap-proximée par l'équation (19) en utilisant les deux écarts latéraux consécutifs ylᵢ et ylᵢ₊₁ dont les valeurs temporelles xᵢ et xᵢ₊₁ sont les plus proches de l'instant de l'abandon du changement de voie x_{abort}.

Puis, durant une étape 16, pour chaque Tn du compteur CP, le module 6 détermine le deuxième vecteur d'état ${ξ}_{1}^{∗}$ comprenant des deuxièmes valeurs de consigne comprenant une deuxième vitesse de lacet de consigne Ψ̇₂ un deuxième angle de cap de consigne Ψ₂, et une deuxième vitesse latérale de consigne *ẏl*₂ et un deuxième écart latéral de consigne yl2_{ref}.

Les deuxièmes valeurs de consigne restantes sont égales à zéro.

Le module 6 détermine la valeur du paramètre de discrétisation Sᵢ de sorte que chaque incrément Tn du compteur temporelle Cp soit compris entre deux variables temporelles xᵢ et xᵢ₊₁ consécutives.

Puis le module 6 détermine les deux deuxièmes écarts latéraux consécutifs yl2ᵢ et yl2 ᵢ₊₁ à partir de la valeur du paramètre de discrétisation Sᵢ.

Le module 6 détermine des valeurs de consigne selon les équations suivantes :
$\dot{y} {12}_{ref} = \frac{yl {2}_{i + 1} - yl {2}_{i}}{{x}_{i + 1} - {x}_{i}}$

${ψ}_{2} = \frac{{a}_{lat 2}}{V}$ où aₗₐₜ₂ est la deuxième accélération latérale instantanée de la trajectoire égale à :
${a}_{lat 2} = \frac{yl {2}_{i + 1} - 2 yl {2}_{i + 1} + yl {2}_{i}}{{x}_{i + 1} - {x}_{i}}$
et
${Ψ}_{2} = \frac{{\dot{y} 12}_{ref}}{V}$

Le deuxième écart latéral de consigne yl2_{ref} est égal à la position latérale du centre de la première voie de circulation VC1.

Au cours d'une étape optionnelle 17, le module 6 peut déterminer le rayon de courbure correctif *ρ_{SALC}* à partir l'accélération latérale instantanée aₗₐₜ₂, la deuxième vitesse latérale *ẏl*2, et de la vitesse longitudinale V du véhicule selon l'équation suivante :
${ρ}_{SALC} = \frac{V ⋅ {a}_{lat 2} - \dot{y} l 2 ⋅ {a}_{lat 2}}{{\left({V}^{2}+\dot{y}l{2}^{2}\right)}^{\frac{3}{2}}}$

La valeur du rayon de courbure correctif *ρ_{SALC}* est transmise au module anticipateur 4 et additionnée à la deuxième commande Uff permettant d'améliorer la dynamique du suivi de trajectoire.

Tant que le véhicule 1 ne circule pas au centre de la voie de circulation VC1 et la valeur atteinte par le compteur CP n'est pas supérieure à la valeur P₃ₓ du point de contrôle P₃ (étape 18), on poursuit à l'étape 16.

Lorsque le véhicule est par exemple au centre de la voie de circulation VC1 ou la valeur atteinte par le compteur CP est supérieure ou égale à la valeur P₃ₓ (étape 18), la manœuvre de retour au centre de la voie de circulation VC1 est terminée. On poursuit à l'étape 10.

En variante, lorsque la valeur absolue de l'écart latéral yl est inférieure à un seuil pendant une durée prédéterminée, la manœuvre de retour au centre de la voie de circulation VC1 est terminée.

Le seuil est par exemple égal à 10 cm et la durée prédéterminée est par exemple égale à 2 secondes.

Si le véhicule 1 n'est pas complétement aligné sur le centre Δ1 de la première voie VC1 à l'issu du changement de trajectoire, la boucle de régulation Br aligne ultérieurement le véhicule 1 sur le centre Δ1.

En variante, par exemple lorsque l'environnement dans lequel évolue le véhicule 1 devient complexe, si le véhicule 1 a franchi la ligne centrale LC lors de l'abandon du changement de voie de circulation (étape 13), le dispositif 5 se désactive et le conducteur reprend le contrôle du véhicule 1.

La [Fig.6] représente l'évolution temporelle du deuxième écart latéral de consigne et le deuxième écart latéral du véhicule 1 par rapport au centre de la voie de circulation du véhicule 1 déterminées par un dispositif de contrôle de trajectoire connu de l'état de la technique (courbes C10 et C11), et pour le dispositif 5 (courbes C20 et C21), et l'évolution temporelle de l'angle volant du véhicule 1 équipé d'un dispositif de contrôle de trajectoire connu de l'état de la technique (courbe C12) et pour le dispositif 5 (courbe C22) lors d'un changement de voie de circulation vers la droite du véhicule 1 puis un retour au centre de la voie de circulation du véhicule 1, le véhicule circulant à la vitesse V de 90 km/h.

Jusqu'à l'instant de l'abandon du changement de voie (x_{abort}), les courbes représentant le deuxième écart latéral de consigne C10 et C20, les courbes représentant le deuxième écart latéral du véhicule 1 par rapport au centre de la voie de circulation C11 et C21, et les courbes représentant l'angle volant du véhicule 1 déterminées à partir du dispositif de contrôle de trajectoire connu de l'état de la technique et par le dispositif 5 sont superposées.

A partir l'instant d'abandon de la manœuvre de changement de voie x_{abort}, les courbes C20 et 21 et C22 ont une amplitude plus petite que les courbes C10, C11 et C12.

On constate que la définition de la coordonnée P_{4y} selon les équations (11), (16) et (17) permet de réduire la position latérale du véhicule 1 équipée du dispositif 5 par rapport à la position latérale du véhicule 1 équipée d'un dispositif connu de l'état de la technique lors de la manœuvre du retour du véhicule 1 au centre de sa voie de circulation, améliorant notamment le confort des passagers du véhicule 1.

## Revendications

1. Procédé de contrôle de trajectoire pour véhicule automobile (1), comprenant :
- le pilotage du véhicule à partir d'un premier vecteur d'état de consigne (ξ*) lors d'un changement de voie de circulation de sorte que le véhicule circulant sur une première voie de circulation (VC1) se déporte sur une deuxième voie de circulation (VC2) en une durée prédéterminée (Tp), la trajectoire du véhicule lors du changement de voie de circulation (TRAJ1) étant modélisée par une première courbe de Bézier (C1) reliant une valeur d'un paramètre de discrétisation (Si) à une valeur d'un premier écart latéral (ylᵢ, ylᵢ₊₁) du véhicule par rapport au centre d'une voie de circulation et à une valeur d'une variable temporelle (xᵢ, xᵢ₊₁) représentative de l'évolution du changement de trajectoire ;
- le pilotage du véhicule à partir d'un deuxième vecteur d'état de consigne ( ${ξ}_{1}^{∗}$) lors d'un abandon du changement de voie de circulation de sorte que le véhicule circulant sur la première voie de circulation (VC1) se déporte au centre de ladite première voie, la trajectoire de retour (TRAJ2) du véhicule au centre de la première voie de circulation étant modélisée par une deuxième courbe de Bézier (C2) paramétrée à partir de la valeur (x_{abort}) de la variable temporelle (x) à l'instant de l'abandon du changement de voie, de la valeur (yl_{abort}) de l'écart latéral (yl) associée par la première courbe de Bézier à ladite valeur, et de paramètres de la première courbe de Bézier,
la deuxième courbe de Bézier (C2) étant en outre paramétrée à partir de la vitesse latérale (*ẏl_{abort}*) de la trajectoire de changement de voie de circulation de la première voie (VC1) vers la deuxième voie (VC2) à l'instant de l'abandon (x_{abort}) du changement de voie
la modélisation de la trajectoire de retour (TRAJ2) du véhicule au centre de la première voie de circulation (VC1) lors de l'abandon du changement de voie de circulation par une deuxième courbe de Bézier (C2) comprenant la détermination d'au moins quatre points de contrôle (P_{abort}, P4, P5, P6) de la deuxième courbe de Bézier, chaque point de contrôle étant identifié par une valeur de la variable temporelle (x) et une valeur d'écart latéral (yl),
- la valeur de la variable temporelle d'un premier point de contrôle (P_{abort}) étant nulle, et la valeur d'écart latéral du premier point de contrôle étant égale à la valeur de l'écart latéral (yl_{abort}) associée par la première courbe de Bézier (C1) à l'instant de l'abandon (x_{abort}) du changement de voie, et
- la valeur de la variable temporelle (P₄ₓ) d'un deuxième point de contrôle (P4) étant déterminée à partir de la valeur de la variable temporelle d'un point de contrôle de la première courbe de Bézier (C1) et de l'instant de l'abandon (x_{abort}) du changement de voie, et la valeur d'écart latéral (P_{4y}) du deuxième point de contrôle étant déterminée à partir de la valeur de la variable temporelle d'un point de contrôle de la première courbe de Bézier, de la position latérale (yl_{abort}) et de la vitesse latérale (*ẏl_{abort}*) de la trajectoire de changement de voie de circulation à l'instant de l'abandon du changement de voie, et
- les troisième et quatrième points de contrôle (P5, P6) étant déterminés de sorte que le cumul de la durée de changement de voie de circulation effectuée par le véhicule et de la durée de retour du véhicule sur la première voie de circulation soit égal à la durée prédéterminée (Tp).

2. Procédé selon la revendication 1, dans lequel la valeur de la variable temporelle (P₅ₓ) du troisième point de contrôle (P5) est égale à la moyenne des valeurs (P_{4X}, P_{6X}) de la variable temporelle des deuxième et quatrième points (P4, P6) de contrôle de la deuxième courbe de Bézier (C2).

3. Procédé selon l'une des revendications 1 et 2, dans lequel la valeur maximale de la variable temporelle (P_{4y}) du deuxième point de contrôle est inférieure ou égale à un seuil de contrôle (Sc) de sorte que le véhicule (1) ne franchisse pas la ligne centrale (LC) séparant les première et deuxième voies de circulation (VC1, VC2).

4. Procédé selon la revendication 3, dans lequel le seuil de contrôle (Sc) est déterminé à partir de la largeur (L1) de la voie de circulation du véhicule (VC1), de la largeur du véhicule (W) et d'un seuil d'ajustement (Sa).

5. Module (6) de calcul de trajectoire pour véhicule automobile, comprenant :
- des moyens pour transmettre un premier vecteur d'état de consigne en entrée d'une boucle de régulation (Br) fermée d'un dispositif de contrôle de trajectoire (5), la boucle étant configurée pour piloter le véhicule automobile (1) de sorte que le véhicule circulant sur une première voie de circulation se déporte sur une deuxième voie de circulation en une durée prédéterminée (Tp), la trajectoire étant modélisée par une première courbe de Bézier (C1) reliant une valeur d'un paramètre de discrétisation (Si) à une valeur d'un écart latéral (ylᵢ, ylᵢ₊₁) du véhicule par rapport au centre d'une voie de circulation sur laquelle évolue le véhicule et à une valeur d'une variable temporelle (xᵢ, xᵢ₊₁) représentative de l'évolution du changement de trajectoire, le vecteur étant déterminé à partir à partir de l'écart latéral, de la variable temporelle et du paramètre de discrétisation,
- des moyens pour modéliser une trajectoire de retour (TRAJ2) du véhicule au centre de la première voie de circulation lors de l'abandon du changement de voie de circulation par une deuxième courbe de Bézier (C2) à partir de la valeur (x_{abort}) de la variable temporelle à l'instant de l'abandon du changement de voie de circulation, de la valeur (yl_{abort}) de l'écart latéral associée par la première courbe de Bézier à ladite valeur, et de paramètres de la première courbe de Bézier (C1),
- des moyens pour déterminer un deuxième vecteur d'état de consigne ( ${ξ}_{1}^{∗}$) de la boucle de régulation (Br) fermée du dispositif de contrôle de trajectoire (5) de sorte que le véhicule retourne circuler au centre de la première voie,
- des moyens pour transmettre le deuxième vecteur d'état de consigne en entrée de la boucle,
la deuxième courbe de Bézier (C2) étant en outre paramétrée à partir de la vitesse latérale (*ẏl_{abort}*) de la trajectoire de changement de voie de circulation de la première voie (VC1) vers la deuxième voie (VC2) à l'instant de l'abandon (x_{abort}) du changement de voie
la deuxième courbe de Bézier (C2) étant paramétrée par au moins quatre points de contrôle (P_{abort}, P4, P5, P6), chaque point de contrôle étant identifié par une valeur de la variable temporelle (x) et une valeur d'écart latéral (yl) et, les moyens pour modéliser une trajectoire de retour (TRAJ2) du véhicule (1) au centre de la première voie (VC1) de circulation lors de l'abandon du changement de voie de circulation étant configurés pour déterminer les quatre points de contrôle de sorte que :
- la valeur de la variable temporelle d'un premier point de contrôle (P_{abort}) est nulle, et la valeur d'écart latéral du premier point de contrôle est égale à la valeur de l'écart latéral (yl_{abort}) associée par la première courbe de Bézier (C1) à l'instant de l'abandon (x_{abort}) du changement de voie,
- la valeur de la variable temporelle(P_{4y}) d'un deuxième point (P4) de contrôle est déterminée à partir de la valeur d'un point de contrôle de la première courbe de Bézier (C1) et de l'instant de l'abandon (x_{abort}) du changement de voie, et la valeur d'écart latéral (P_{4y}) du deuxième point de contrôle est déterminée à partir de la valeur de la variable temporelle d'un point de contrôle de la première courbe de Bézier (C1), de la position latérale (yl_{abort}) et de la vitesse latérale du (*ẏl_{abort}*) de la trajectoire de changement de voie de circulation à l'instant de l'abandon du changement de voie, et
- les troisième et quatrième points de contrôle (P5, P6) sont déterminés de sorte que le cumul de la durée de changement de voie de circulation effectuée par le véhicule et de la durée de retour du véhicule sur la première voie de circulation soit égal à la durée prédéterminée (Tp).

6. Module de calcul selon la revendication 5, dans lequel la valeur de la variable temporelle (P₅ₓ) du troisième point de contrôle (P5) est égale à la moyenne des valeurs (P_{4X}, P_{6X}) de la variable temporelle des deuxième et quatrième points (P4, P6) de contrôle de la deuxième courbe de Bézier (C2).

7. Module de calcul selon l'une des revendications 5 et 6, dans lequel les moyens pour modéliser une trajectoire de retour (TRAJ2) sont en outre configurés pour déterminer un seuil de contrôle (Sc) de sorte que le véhicule (1) ne franchisse pas la ligne centrale (LC) séparant les première et deuxième voies de circulation (VC1, VC2), et saturer la valeur de la variable temporelle (P_{4Y}) du deuxième point (P₄) de contrôle de sorte que la valeur maximale de ladite variable soit inférieure ou égale au seuil de contrôle.

8. Module de calcul selon la revendication 7, dans lequel les moyens pour modéliser une trajectoire de retour (TRAJ2) sont configurer pour déterminer le seuil de contrôle (Sc) à partir de la largeur (L1) de la voie de circulation (VC1) du véhicule, de la largeur du véhicule et d'un seuil d'ajustement.

9. Dispositif de contrôle de trajectoire (5) comprenant un module de calcul de trajectoire (6) selon l'une des revendications 5 à 8, et une boucle de régulation fermée (Br) configurée pour recevoir en consigne successivement les premier et deuxième vecteurs d'état de consigne transmis par le module de calcul de trajectoire, la boucle de régulation étant en outre configurée pour piloter le véhicule automobile (1) de sorte qu'il suive les trajectoires (TRAJ1, TRAJ2) modélisées par les première et deuxième courbes de Bézier (C1, C2).

## Patentansprüche

1. Verfahren zur Trajektorienregelung für ein Kraftfahrzeug (1), umfassend:
- das Steuern des Fahrzeugs ausgehend von einem ersten Soll-Zustandsvektor (*ξ**) bei einem Fahrspurwechsel, so dass sich das auf einer ersten Fahrspur (VC1) fahrende Fahrzeug in einer vorbestimmten Dauer (Tp) auf eine zweite Fahrspur (VC2) verlagert, wobei die Trajektorie des Fahrzeugs bei dem Fahrspurwechsel (TRAJ1) durch eine erste Bézier-Kurve (C1) modelliert wird, die einen Wert eines Diskretisierungsparameters (Si) mit einem Wert einer ersten seitlichen Abweichung (ylᵢ, ylᵢ₊₁) des Fahrzeugs in Bezug auf die Mitte einer Fahrspur und mit einem Wert einer Zeitvariablen (xᵢ, xᵢ₊₁), die für den Verlauf des Trajektorienwechsels repräsentativ ist, verknüpft;
- das Steuern des Fahrzeugs ausgehend von einem zweiten Soll-Zustandsvektor ( ${ξ}_{1}^{∗}$) bei einer Aufgabe des Fahrspurwechsels, so dass sich das auf der ersten Fahrspur (VC1) fahrende Fahrzeug zur Mitte der ersten Spur verlagert, wobei die Rücktrajektorie (TRAJ2) des Fahrzeugs zur Mitte der ersten Fahrspur durch eine zweite Bézier-Kurve (C2) modelliert wird, die ausgehend von dem Wert (x_{abort}) der Zeitvariablen (x) zum Zeitpunkt der Aufgabe des Spurwechsels, von dem Wert (yl_{abort}) der seitlichen Abweichung (yl), die durch die erste Bézier-Kurve dem Wert zugeordnet ist, und von Parametern der ersten Bézier-Kurve parametriert wird,
wobei die zweite Bézier-Kurve (C2) weiterhin ausgehend von der Seitengeschwindigkeit (*ẏl_{abort}*) der Fahrspurwechseltrajektorie von der ersten Spur (VC1) zu der zweiten Spur (VC2) zum Zeitpunkt der Aufgabe (x_{abort}) des Spurwechsels parametriert wird
wobei die Modellierung der Rücktrajektorie (TRAJ2) des Fahrzeugs zur Mitte der ersten Fahrspur (VC1) bei der Aufgabe des Fahrspurwechsels durch eine zweite Bézier-Kurve (C2) die Bestimmung von mindestens vier Kontrollpunkten (P_{abort}, P4, P5, P6) der zweiten Bézier-Kurve umfasst, wobei jeder Kontrollpunkt durch einen Wert der Zeitvariablen (x) und einen Wert der seitlichen Abweichung (yl) identifiziert wird,
- wobei der Wert der Zeitvariablen eines ersten Kontrollpunktes (P_{abort}) null ist und wobei der Wert der seitlichen Abweichung des ersten Kontrollpunktes gleich dem Wert der seitlichen Abweichung (yl_{abort}) ist, der durch die erste Bézier-Kurve (C1) dem Zeitpunkt der Aufgabe (x_{Abort}) des Spurwechsels zugeordnet ist, und
- wobei der Wert der Zeitvariablen (P₄ₓ) eines zweiten Kontrollpunktes (P4) ausgehend von dem Wert der Zeitvariablen eines Kontrollpunktes der ersten Bézier-Kurve (C1) und von dem Zeitpunkt der Aufgabe (x_{abort}) des Spurwechsels bestimmt wird und wobei der Wert der seitlichen Abweichung (P_{4y}) des zweiten Kontrollpunktes ausgehend von dem Wert der Zeitvariablen eines Kontrollpunktes der ersten Bézier-Kurve, von der seitlichen Position (yl_{abort}) und von der Seitengeschwindigkeit *(ẏl_{abort})* der Fahrspurwechseltrajektorie zum Zeitpunkt der Aufgabe des Spurwechsel bestimmt wird, und
- wobei der dritte und der vierte Kontrollpunkt (P5, P6) so bestimmt werden, dass die Summe der Dauer des Fahrspurwechsels durch das Fahrzeug und der Dauer der Rückkehr des Fahrzeugs auf die erste Fahrspur gleich der vorbestimmten Dauer (Tp) ist.

2. Verfahren nach Anspruch 1, wobei der Wert der Zeitvariablen (P₅ₓ) des dritten Kontrollpunktes (P5) gleich dem Mittelwert der Werte (P_{4X}, P_{6X}) der Zeitvariablen des zweiten und des vierten Kontrollpunktes (P4, P6) der zweiten Bézier-Kurve (C2) ist.

3. Verfahren nach einem der Ansprüche 1 und 2, wobei der Maximalwert der Zeitvariablen (P_{4y}) des zweiten Kontrollpunktes kleiner oder gleich einem Regelungsschwellenwert (Sc) ist, so dass das Fahrzeug (1) die Mittellinie (LC), welche die erste und die zweite Fahrspur (VC1, VC2) trennt, nicht überfährt.

4. Verfahren nach Anspruch 3, wobei der Regelungsschwellenwert (Sc) ausgehend von der Breite (L1) der Fahrspur (VC1 des Fahrzeugs), von der Breite (W) des Fahrzeugs und von einem Anpassungsschwellenwert (Sa) bestimmt wird.

5. Modul (6) zur Berechnung einer Trajektorie für ein Kraftfahrzeug, umfassend:
- Mittel zur Übertragung eines ersten Soll-Zustandsvektors als Eingang eines geschlossenen Regelkreises (Br) einer Trajektorienregelungsvorrichtung (5), wobei der Kreis dazu ausgelegt ist, das Kraftfahrzeug (1) so zu steuern, dass sich das auf einer ersten Fahrspur fahrende Fahrzeug in einer vorbestimmten Dauer (Tp) auf eine zweite Fahrspur verlagert, wobei die Trajektorie durch eine erste Bézier-Kurve (C1) modelliert wird, die einen Wert eines Diskretisierungsparameters (Si) mit einem Wert einer seitlichen Abweichung (ylᵢ, ylᵢ₊₁) des Fahrzeugs in Bezug auf die Mitte einer Fahrspur, auf der sich das Fahrzeug fortbewegt, und mit einem Wert einer Zeitvariablen (xᵢ, xᵢ₊₁), die für den Verlauf des Trajektorienwechsels repräsentativ ist, verknüpft, wobei der Vektor ausgehend von der seitlichen Abweichung, von der Zeitvariablen und von dem Diskretisierungsparameter bestimmt wird,
- Mittel zur Modellierung einer Rücktrajektorie (TRAJ2) des Fahrzeugs zur Mitte der ersten Fahrspur bei der Aufgabe des Fahrspurwechsels durch eine zweite Bézier-Kurve (C2) ausgehend von dem Wert (x_{abort}) der Zeitvariablen zum Zeitpunkt der Aufgabe des Fahrspurwechsels, von dem Wert (yl_{abort}) der seitlichen Abweichung, der durch die erste Bézier-Kurve dem Wert zugeordnet ist, und von Parametern der ersten Bézier-Kurve (C1),
- Mittel zur Bestimmung eines zweiten Soll-Zustandsvektors ( ${ξ}_{1}^{∗}$) des geschlossenen Regelkreises (Br) der Trajektorienregelungsvorrichtung (5), so dass das Fahrzeug zur Mitte der ersten Fahrspur zurückfährt;
- Mittel zur Übertragung des zweiten Soll-Zustandsvektors als Eingang des Kreises,
wobei die zweite Bézier-Kurve (C2) weiterhin ausgehend von der Seitengeschwindigkeit *(ylabort*) der Fahrspurwechseltrajektorie von der ersten Spur (VC1) zu der zweiten Spur (VC2) zum Zeitpunkt der Aufgabe (xabort) des Spurwechsels parametriert wird
wobei die zweite Bézier-Kurve (C2) durch mindestens vier Kontrollpunkte (Pabort, P4, P5, P6) parametriert wird, wobei jeder Kontrollpunkt durch einen Wert der Zeitvariablen (x) und einen Wert der seitlichen Abweichung (yl) identifiziert wird und wobei die Mittel zur Modellierung einer Rücktrajektorie (TRAJ2) des Fahrzeugs (1) zur Mitte der ersten Fahrspur (VC1) bei der Aufgabe des Fahrspurwechsel dazu ausgelegt sind, die vier Kontrollpunkte so zu bestimmen, dass:
- der Wert der Zeitvariablen eines ersten Kontrollpunktes (P_{abort}) null ist und der Wert der seitlichen Abweichung des ersten Kontrollpunktes gleich dem Wert der seitlichen Abweichung (yl_{abort}) ist, der durch die erste Bézier-Kurve (C1) dem Zeitpunkt der Aufgabe (x_{Abort}) des Spurwechsels zugeordnet ist,
- der Wert der Zeitvariablen (P_{4y}) eines zweiten Kontrollpunktes (P4) ausgehend von dem Wert eines Kontrollpunktes der ersten Bézier-Kurve (C1) und von dem Zeitpunkt der Aufgabe (x_{Abort}) des Spurwechsels bestimmt wird und der Wert der seitlichen Abweichung (P_{4y}) des zweiten Kontrollpunktes ausgehend von dem Wert der Zeitvariablen eines Kontrollpunktes der ersten Bézier-Kurve (C1), von der seitlichen Position (yl_{abort}) und von der Seitengeschwindigkeit (*ẏl_{abort}*) der Fahrspurwechseltrajektorie zum Zeitpunkt der Aufgabe des Spurwechsels bestimmt wird, und
- der dritte und der vierte Kontrollpunkt (P5, P6) so bestimmt werden, dass die Summe der Dauer des Fahrspurwechsels durch das Fahrzeug und der Dauer der Rückkehr des Fahrzeugs auf die erste Fahrspur gleich der vorbestimmten Dauer (Tp) ist.

6. Modul zur Berechnung nach Anspruch 5, wobei der Wert der Zeitvariablen (P₅ₓ) des dritten Kontrollpunktes (P5) gleich dem Mittelwert der Werte (P_{4X}, P_{6X}) der Zeitvariablen des zweiten und des vierten Kontrollpunktes (P4, P6) der zweiten Bézier-Kurve (C2) ist.

7. Modul zur Berechnung nach einem der Ansprüche 5 und 6, wobei die Mittel zur Modellierung einer Rücktrajektorie (TRAJ2) weiterhin dazu ausgelegt sind, einen Regelungsschwellenwert (Sc) zu bestimmen, so dass das Fahrzeug (1) die Mittellinie (LC), welche die erste und die zweite Fahrspur (VC1, VC2) trennt, nicht überfährt, und der Wert der Zeitvariablen (P_{4Y}) des zweiten Kontrollpunktes (P₄) gesättigt wird, so dass der Maximalwert der Variablen kleiner oder gleich dem Regelungsschwellenwert ist.

8. Modul zur Berechnung nach Anspruch 7, wobei die Mittel zur Modellierung einer Rücktrajektorie (TRAJ2) dazu ausgelegt sind, den Regelungsschwellenwert (Sc) ausgehend von der Breite (L1) der Fahrspur (VC1) des Fahrzeugs, von der Breite des Fahrzeugs und von einem Anpassungsschwellenwert zu bestimmen.

9. Trajektorienregelungsvorrichtung (5), umfassend ein Modul (6) zur Berechnung einer Trajektorie nach einem der Ansprüche 5 bis 8 und einen geschlossenen Regelkreis (Br), der dazu ausgelegt ist, als Sollwert nacheinander den ersten und den zweiten Soll-Zustandsvektor zu empfangen, die von dem Modul zur Berechnung einer Trajektorie übertragen werden, wobei der Regelkreis weiterhin dazu ausgelegt ist, das Kraftfahrzeug (1) so zu steuern, dass es den Trajektorien (TRAJ1, TRAJ2) folgt, die durch die erste und die zweite Bézier-Kurve (C1, C2) modelliert werden.

## Claims

1. Path control method for a motor vehicle (1), comprising:
- controlling the vehicle on the basis of a first setpoint state vector (*ξ**) during a change of traffic lane so that the vehicle travelling in a first traffic lane (VC1) drifts into a second traffic lane (VC2) in a predetermined duration (Tp), the path of the vehicle during the change of traffic lane (TRAJ1) being modelled by a first Bézier curve (C1) linking a value of a discretization parameter (Si) to a value of a first lateral deviation (ylᵢ, ylᵢ₊₁) of the vehicle with respect to the centre of a traffic lane and to a value of a time variable (xᵢ, xᵢ₊₁) which is representative of the evolution of the change in path;
- controlling the vehicle on the basis of a second setpoint state vector ( ${ξ}_{1}^{∗}$) when the change of traffic lane is abandoned so that the vehicle travelling in the first traffic lane (VC1) drifts to the centre of said first lane, the return path (TRAJ2) of the vehicle to the centre of the first traffic lane being modelled by a second Bézier curve (C2) parameterized on the basis of the value (x_{abort}) of the time variable (x) at the instant when the change of lane is abandoned, of the value (yl_{abort}) of the lateral deviation (yl) associated by the first Bézier curve with said value, and of parameters of the first Bézier curve,
the second Bézier curve (C2) being further parameterized on the basis of the lateral speed (*ẏl_{abort}*) of the path for changing traffic lane from the first lane (VC1) to the second lane (VC2) at the instant (x_{abort}) when the change of lane is abandoned,
modelling the return path (TRAJ2) of the vehicle to the centre of the first traffic lane (VC1) when the change of traffic lane is abandoned by a second Bézier curve (C2) comprising determining at least four control points (P_{abort}, P4, P5, P6) of the second Bézier curve, each control point being identified by a value of the time variable (x) and a lateral deviation value (yl),
- the value of the time variable of a first control point (P_{abort}) being zero, and the lateral deviation value of the first control point being equal to the value of the lateral deviation (yl_{abort}) associated by the first Bézier curve (C1) with the instant (x_{abort}) when the change of lane is abandoned, and
- the value of the time variable (P₄ₓ) of a second control point (P4) being determined on the basis of the value of the time variable of a control point of the first Bézier curve (C1) and of the instant (x_{abort}) when the change of lane is abandoned, and the lateral deviation value (P_{4y}) of the second control point being determined on the basis of the value of the time variable of a control point of the first Bézier curve, of the lateral position (yl_{abort}) and of the lateral speed (*ẏl_{abort}*) of the path for changing traffic lane at the instant when the change of lane is abandoned, and
- the third and fourth control points (P5, P6) being determined so that the sum of the duration of the change of traffic lane made by the vehicle and of the duration of the return of the vehicle to the first traffic lane is equal to the predetermined duration (Tp).

2. Method according to Claim 1, wherein the value of the time variable (P₅ₓ) of the third control point (P5) is equal to the average of the values (P_{4X}, P_{6X}) of the time variable of the second and fourth control points (P4, P6) of the second Bézier curve (C2).

3. Method according to one of Claims 1 and 2, wherein the maximum value of the time variable (P_{4y}) of the second control point is below or equal to a control threshold (Sc) so that the vehicle (1) does not cross the centre line (LC) separating the first and second traffic lanes (VC1, VC2).

4. Method according to Claim 3, wherein the control threshold (Sc) is determined on the basis of the width (L1) of the traffic lane (VC1) of the vehicle, of the width (W) of the vehicle and of an adjustment threshold (Sa).

5. Path calculation module (6) for a motor vehicle, comprising:
- means for transmitting a first setpoint state vector as input to a closed control loop (Br) of a path control device (5), the loop being configured to control the motor vehicle (1) so that the vehicle travelling in a first traffic lane drifts into a second traffic lane in a predetermined duration (Tp), the path being modelled by a first Bézier curve (C1) linking a value of a discretization parameter (Si) to a value of a lateral deviation (ylᵢ, ylᵢ₊₁) of the vehicle with respect to the centre of a traffic lane in which the vehicle is moving and to a value of a time variable (xᵢ, xᵢ₊₁) which is representative of the evolution of the change in path, the vector being determined on the basis of the lateral deviation, of the time variable and of the discretization parameter,
- means for modelling a return path (TRAJ2) of the vehicle to the centre of the first traffic lane when the change of traffic lane is abandoned by a second Bézier curve (C2) on the basis of the value (x_{abort}) of the time variable at the instant when the change of traffic lane is abandoned, of the value (yl_{abort}) of the lateral deviation associated by the first Bézier curve with said value, and of parameters of the first Bézier curve (C1),
- means for determining a second setpoint state vector ( ${ξ}_{1}^{∗}$) of the closed control loop (Br) of the path control device (5) so that the vehicle returns to travelling in the centre of the first lane,
- means for transmitting the second setpoint state vector as input to the loop,
the second Bézier curve (C2) being further parameterized on the basis of the lateral speed (*yl_{abort}*) of the path for changing traffic lane from the first lane (VC1) to the second lane (VC2) at the instant (x_{abort}) when the change of lane is abandoned,
the second Bézier curve (C2) being parameterized by at least four control points (P_{abort}, P4, P5, P6), each control point being identified by a value of the time variable (x) and a lateral deviation value (yl), and the means for modelling a return path (TRAJ2) of the vehicle (1) to the centre of the first traffic lane (VC1) when the change of traffic lane is abandoned being configured to determine the four control points so that:
- the value of the time variable of a first control point (P_{abort}) is zero, and the lateral deviation value of the first control point is equal to the value of the lateral deviation (yl_{abort}) associated by the first Bézier curve (C1) with the instant (x_{abort}) when the change of lane is abandoned,
- the value of the time variable (P_{4y}) of a second control point (P4) is determined on the basis of the value of a control point of the first Bézier curve (C1) and of the instant (x_{abort}) when the change of lane is abandoned, and the lateral deviation value (P_{4y}) of the second control point is determined on the basis of the value of the time variable of a control point of the first Bézier curve (C1), of the lateral position (yl_{abort}) and of the lateral speed (*ẏl_{abort}*) of the path for changing traffic lane at the instant when the change of lane is abandoned, and
- the third and fourth control points (P5, P6) are determined so that the sum of the duration of the change of traffic lane made by the vehicle and of the duration of the return of the vehicle to the first traffic lane is equal to the predetermined duration (Tp).

6. Calculation module according to Claim 5, wherein the value of the time variable (P₅ₓ) of the third control point (P5) is equal to the average of the values (P_{4X}, P_{6X}) of the time variable of the second and fourth control points (P4, P6) of the second Bézier curve (C2).

7. Calculation module according to one of Claims 5 and 6, wherein the means for modelling a return path (TRAJ2) are further configured to determine a control threshold (Sc) so that the vehicle (1) does not cross the centre line (LC) separating the first and second traffic lanes (VC1, VC2), and saturate the value of the time variable (P_{4Y}) of the second control point (P₄) so that the maximum value of said variable is below or equal to the control threshold.

8. Calculation module according to Claim 7, wherein the means for modelling a return path (TRAJ2) are configured to determine the control threshold (Sc) on the basis of the width (L1) of the traffic lane (VC1) of the vehicle, of the width of the vehicle and of an adjustment threshold.

9. Path control device (5) comprising a path calculation module (6) according to one of Claims 5 to 8, and a closed control loop (Br) configured to successively receive as setpoints the first and second setpoint state vectors transmitted by the path calculation module, the control loop being further configured to control the motor vehicle (1) so that it follows the paths (TRAJ1, TRAJ2) modelled by the first and second Bézier curves (C1, C2).
